(19) Europäisches Patentamt
European Patent Office
Office européen des brevets

(11) **EP 3 677 497 B1**

(12) **EUROPEAN PATENT SPECIFICATION**

(45) Date of publication and mention
of the grant of the patent:
**20.07.2022 Bulletin 2022/29**

(21) Application number: **18851538.1**

(22) Date of filing: **30.08.2018**

(51) International Patent Classification (IPC):
**B63B 25/16** (2006.01)     **F17C 3/04** (2006.01)

(52) Cooperative Patent Classification (CPC):
**F17C 13/001; B63B 25/16;** F17C 2201/0104;
F17C 2201/0128; F17C 2201/032; F17C 2201/052;
F17C 2205/0107; F17C 2205/013; F17C 2221/012;
F17C 2221/033; F17C 2221/035; F17C 2223/0153;
F17C 2223/0161; F17C 2223/033;
F17C 2227/0135;                              (Cont.)

(86) International application number:
**PCT/JP2018/032042**

(87) International publication number:
**WO 2019/044938 (07.03.2019 Gazette 2019/10)**

(54) **LIQUEFIED GAS CARRYING VESSEL**

FLÜSSIGGASBEFÖRDERUNGSSCHIFF

RÉCIPIENT DE TRANSPORT DE GAZ LIQUÉFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2017 JP 2017167512**

(43) Date of publication of application:
**08.07.2020 Bulletin 2020/28**

(73) Proprietor: **Kawasaki Jukogyo Kabushiki Kaisha
Kobe-shi, Hyogo 650-8670 (JP)**

(72) Inventors:
• **IWASAKI, Hidekazu
Kobe-shi, Hyogo 650-8670 (JP)**
• **TAKATA, Hirotaka
Kobe-shi, Hyogo 650-8670 (JP)**
• **SHINMURA, Nobuhiro
Kobe-shi, Hyogo 650-8670 (JP)**
• **ANDOH, Akihiro
Kobe-shi, Hyogo 650-8670 (JP)**

(74) Representative: **Leinweber & Zimmermann
Patentanwalts-PartG mbB
European Patent Attorneys
Viktualienmarkt 8
80331 München (DE)**

(56) References cited:
JP-A- 2000 053 096     JP-A- 2000 053 096
JP-A- 2007 308 043     JP-A- 2007 308 043
JP-B1- S 354 636       JP-U- H0 265 692
JP-U- S4 830 412       JP-U- S4 830 412
JP-U- S5 580 600       JP-U- S5 863 499
JP-U- S5 863 499       KR-U- 20170 000 687
US-A- 4 140 073

(52) Cooperative Patent Classification (CPC): (Cont.)
F17C 2227/0178; F17C 2227/0348;
F17C 2227/0374; F17C 2250/032; F17C 2260/026;
F17C 2270/0105

**Description**

**Technical Field**

The present invention relates to a liquefied gas carrying vessel according to the preamble of claim 1, JP 2007 308043 A.

**Background Art**

A liquefied gas carrying vessel that carries a liquefied natural gas (LNG) transports the liquefied gas loaded within a tank at a loading port to a discharge port while cold-insulating the liquefied gas cool. During transportation, the liquefied gas is naturally evaporated due to heat input from outside air and a boil-off gas is generated within the tank. A natural vaporization rate (boil-off rate) is one of indices that influence the worth of a ship, and development for reducing the natural vaporization rate has been conducted.

For example, PTL 1 discloses a liquefied gas carrying vessel that includes a tank which stores a liquefied gas therein, a hull which has a tank accommodation unit accommodating the tank, and a heat insulator body which is supported by the tank accommodation unit so as to surround the tank. In this liquefied gas carrying vessel, even though a heat insulating material is thickened and a weight of the heat insulating material is increased, the heat insulating material is intended to be reliably supported by the tank accommodation unit. An upper portion of the tank is covered with a tank cover provided at an upper deck of the hull.

**Citation List**

**Patent Literature**

PTL 1: JP 2016-16806 A

**Summary of Invention**

**Technical Problem**

An increase in the thickness of the heat insulating material provided in the tank leads to an increase in a ship width. In recent years, there is a need to increase a tank capacity, but the propulsion performance of the ship is deteriorated by the increase in the ship width. It is difficult to increase a horizontal width of the ship in the liquefied gas carrying vessel due to restrictions (currently 49 m) on the New Panama Canal Channel. Thus, as a means for reducing heat entering the tank from the outside air, another measure is required instead of increasing the thickness of the heat insulating material.

Therefore, an object of the present invention is to provide a liquefied gas carrying vessel capable of reducing heat entering a tank from outside air while suppressing a thickness of a heat insulating material with respect to the tank that stores a liquefied gas.

**Solution to Problem**

In order to solve the above problems, the inventors of the present invention have found that when the tank cover becomes a high temperature by being heated by the outside air and solar irradiation around the tank cover, a temperature of the gas between the tank and the tank cover is increased by the heat transferred from the tank cover and the heat entering the tank is also increased. The present invention has been made from such a viewpoint.

That is, a liquefied gas carrying vessel according to the present invention a tank that stores a liquefied gas, a tank cover that covers the tank, and a plurality of nozzles that is arranged outside the tank cover, and injects cooling water to an outer surface of the tank cover.

According to the aforementioned configuration, it is possible to reduce the temperature of the tank cover by injecting the cooling water to the outer surface of the tank cover. Accordingly, the heat amount transferred from the tank cover to the gas between the tank and the tank cover can be reduced, and the temperature rise of the gas around the tank can be consequently suppressed. Therefore, it is possible to reduce heat entering the tank from the outside.

In the liquefied gas carrying vessel according to the invention, the tank cover has a plurality of cooling target regions corresponding to the plurality of nozzles, and the liquefied gas carrying vessel may further include a plurality of opening and closing valves that is provided so as to correspond to the plurality of nozzles, a heat amount calculation unit that calculates a determination heat amount based on at least one of a convective heat transfer amount which is a heat amount transferred from outside air around the tank cover and a solar irradiation amount which is a heat amount transferred by solar irradiation for each of the plurality of cooling target regions, and an opening and closing determination unit that determines whether or not to open each of the plurality of opening and closing valves based on the calculated determination heat amount. According to this configuration, since it is determined whether or not to open each of the plurality of opening and closing valves based on the determination heat amount of each of the cooling target regions, a location of the tank cover at which the heat amount transferred from the outside is large can be mainly cooled by appropriately opening and closing the opening and closing valve by using the determination result.

In the liquefied gas carrying vessel, the tank cover may have a hemispherical shape, and the plurality of nozzles may be arranged at an upper portion of the tank cover so as to be arranged in a circumferential direction in planar view, and the nozzle may be a spray nozzle that injects the cooling water to the outer surface of the tank cover while diffusing the cooling water. According to this configuration, at the upper portion of the tank cover, the cooling water injected from each spray nozzle flows downward along a hemispherical surface of the tank cover due to gravity. Thus, not only the location of the outer surface of the tank cover to which the cooling water is directly injected but also the location with which the cooling water comes in contact by flowing along the hemispherical surface of the tank cover can be cooled. Therefore, the tank cover can be efficiently cooled.

**Advantageous Effects of Invention**

According to the present invention, it is possible to provide a liquefied gas carrying vessel capable of reducing heat entering a tank from outside air while suppressing a thickness of a heat insulating material with respect to a tank that stores a liquefied gas.

**Brief Description of Drawings**

Fig. 1 is a side view of a liquefied gas carrying vessel according to an embodiment of the present invention.
Fig. 2 is a cross-sectional view of the liquefied gas carrying vessel taken along a line II-II illustrated in Fig. 1.
Fig. 3 is a schematic diagram illustrating a configuration of a cooling system provided in the liquefied gas carrying vessel illustrated in Fig. 1.
Fig. 4 is a top view of a tank cover provided in the liquefied gas carrying vessel illustrated in Fig. 1.
Fig. 5 is a block diagram illustrating a functional configuration of a control device in the cooling system illustrated in Fig. 4.
Fig. 6 is a top view of the tank cover schematically illustrating an example of a distribution of the heat amount transferred from atmosphere to the tank cover.
Fig. 7 is a top view of the tank cover schematically illustrating an example of a distribution of the heat amount transferred to the tank cover by solar radiation.
Fig. 8 is a graph illustrating an example of a temporal change of a predicted natural vaporization rate and a spray time zone.

**Description of Embodiments**

Hereinafter, a liquefied gas carrying vessel according to an embodiment of the present invention will be described with reference to the drawings.

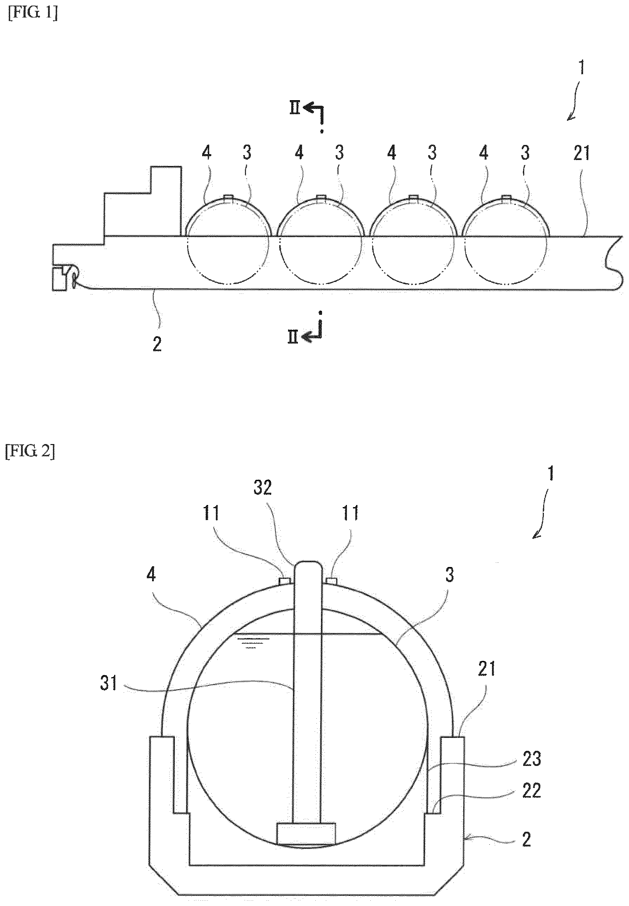

Fig. 1 is a side view of a liquefied gas carrying vessel 1 according to the embodiment. A plurality (four in this example) of tanks 3 that stores liquefied gas is arranged at a hull 2 of the liquefied gas carrying vessel 1 in a longitudinal direction of the hull. The liquefied gas stored in the tanks 3 is, for example, liquefied natural gas (LNG), LPQ or liquid hydrogen.

The tank 3 is a MOSS type spherical tank. Although it has been described in the present embodiment that the tank 3 is a true sphere, for example, the tank 3 may be a cylindrical vertical tank having a shape that forms a part of a hemisphere at the top, or may be a substantially spherical shape which is a non-spherical shape. An outer surface of the tank 3 is covered with a heat insulating material (not illustrated). An upper portion of the tank 3 protrudes above an upper deck 21 of the hull 2. In addition, tank covers 4 that respectively cover upper portions of the tanks 3 protruding above the upper deck 21 are provided at the upper deck 21.

Fig. 2 is a cross-sectional view of the liquefied gas carrying vessel 1 taken along a line II-II illustrated in Fig. 1. Fig. 2 schematically illustrates a structure for supporting the tank 3. A foundation deck 22 is provided around the tank 3 and below the upper deck 21 of the hull 2. A cylindrical skirt 23 that supports the tank 3 is provided at the foundation deck 22. A pipe tower 31 is provided at a center of the tank 3 so as to extend vertically. The pipe tower 31 accommodates handling piping and pumps (not illustrated). A tank dome 32 is provided at a top portion of the tank 3. The tank dome 32 has an entrance that guides a plurality of pipes such as handling pipes from outside the tank 3 to the pipe tower 31.

A lower end portion of the tank cover 4 is supported by the upper deck 21. The tank cover 4 has a hemispherical shape, and spreads along an outer surface of the upper portion of the tank 3 at a predetermined distance outside the tank 3. The tank dome 32 protrudes from a center of the tank cover 4, and is covered by a dome cover (not illustrated).

In the present embodiment, a plurality of nozzles 11 that injects cooling water to an outer surface of the tank cover 4 is arranged outside the tank cover 4. The liquefied gas carrying vessel 1 of the present embodiment includes a cooling system 10 that cools the tank cover 4 by injecting the cooling water from the plurality of nozzles 11.

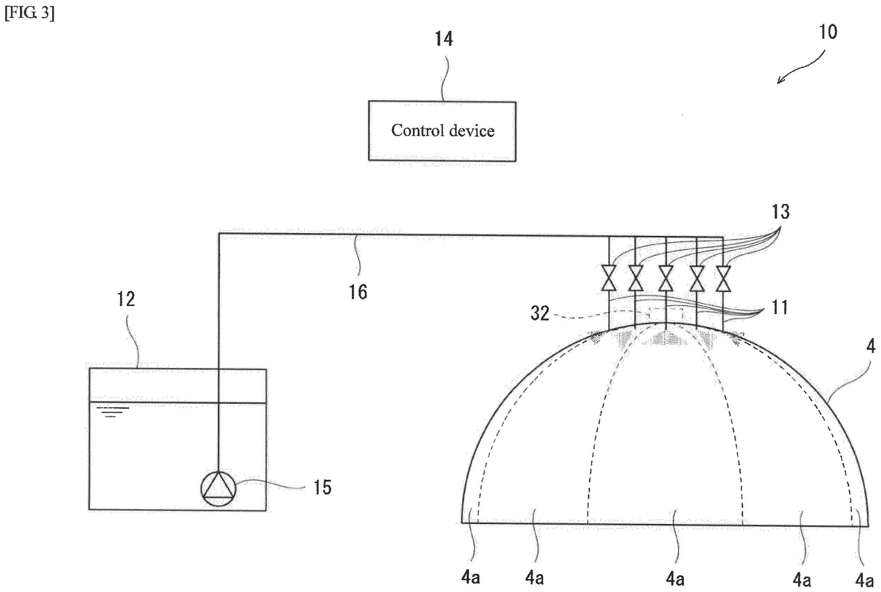

Fig. 3 is a schematic diagram illustrating a configuration of the cooling system 10. Although only one tank cover 4 of the four tank covers 4 included in the liquefied gas carrying vessel 1 is illustrated in Fig. 3, the cooling system 10 is provided for each of the four tank covers 4.

The cooling system 10 includes the plurality of nozzles 11, a storage tank 12 that stores the cooling water, a plurality of opening and closing valves 13 provided so as to correspond to the plurality of nozzles 11, and a control device 14. A pump 15 is disposed within the storage tank 12, and a supply line 16 extends from the pump 15 to the nozzles 11. The cooling water within the storage tank 12 is taken out of the storage tank 12 by the supply line 16, and is guided to each of the plurality of nozzles 11. The cooling water may be supplied to the nozzle 11 by charging the storage tank 12 with air or a gas such as nitrogen and pressurizing the cooling water instead of operating the pump 15.

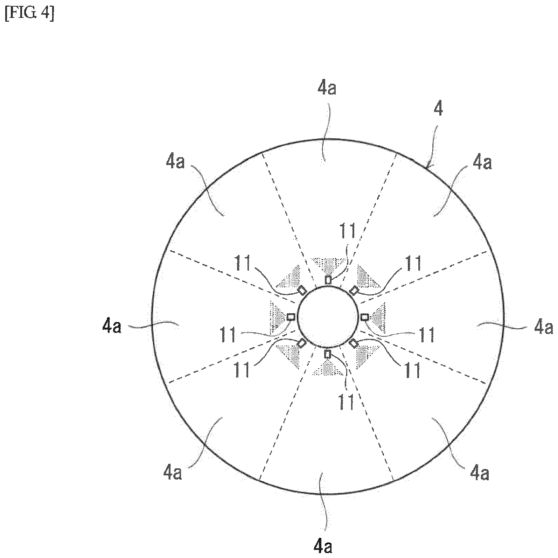

Fig. 4 is a top view of the tank cover 4. In Fig. 4, the plurality of nozzles 11 is schematically illustrated, and pipes for guiding the cooling water to each nozzle 11 are omitted. The nozzle 11 is a spray nozzle, and injects the cooling water to the outer surface of the tank cover 4 while diffusing the cooling water. The plurality of nozzles 11 is arranged at an upper portion of the tank cover 4 so as to be arranged in a circumferential direction in planer view. Specifically, the plurality of nozzles 11 is arranged around the tank dome 32, for example, around a dome cover (not illustrated) at intervals along the circumferential direction.

The tank cover 4 has a plurality of cooling target regions 4a corresponding to the plurality of nozzles 11. The cooling target region 4a is a partial region of the tank cover 4 to be cooled by the cooling water injected from the corresponding nozzle 11. In Fig. 4, a boundary between two adjacent cooling target regions 4a is represented by a broken line. As illustrated in Fig. 4, the cooling target regions 4a are formed by dividing the tank cover 4 into the same number of regions as the number of nozzles 11 in the circumferential direction in planar view. The cooling target region 4a includes a location to which the cooling water is directly injected from the nozzle 11 and a location with which the injected cooling water flows downward and comes in contact.

Referring back to Fig. 3, the storage tank 12 stores fresh water as the cooling water. For example, the fresh water is generated from seawater by a fresh water generation device (not illustrated) provided at the hull 2. At the hull 2, the storage tank 12 may be provided for each tank cover 4, or one common storage tank 12 may be provided for the plurality of tank covers 4.

The opening and closing valve 13 is an automatic valve that is controlled so as to be opened and closed based on a determination result of the control device 14 to be described below. When the opening and closing valve 13 is opened, the injection of the cooling water from the corresponding nozzle 11 is started, and when the opening and closing valve 13 is closed, the injection of the cooling water from the corresponding nozzle 11 is stopped.

The control device 14 is, for example, a computer, and includes an arithmetic processing unit such as a CPU and a storage unit such as a ROM and a RAM (all not illustrated). The storage unit stores programs executed by the arithmetic processing unit and various fixed data. The arithmetic processing unit transmits and receives data to and from an external device, receives signals input from various instruments, and outputs control signals to control targets. The arithmetic processing unit t reads and executes software such as the program stored in the storage unit, and thus, processing for controlling the cooling system 10 is performed in the control device 14. The control device 14 may execute each processing through centralized control using a single computer, or may execute each processing through distributed control by cooperation of a plurality of computers.

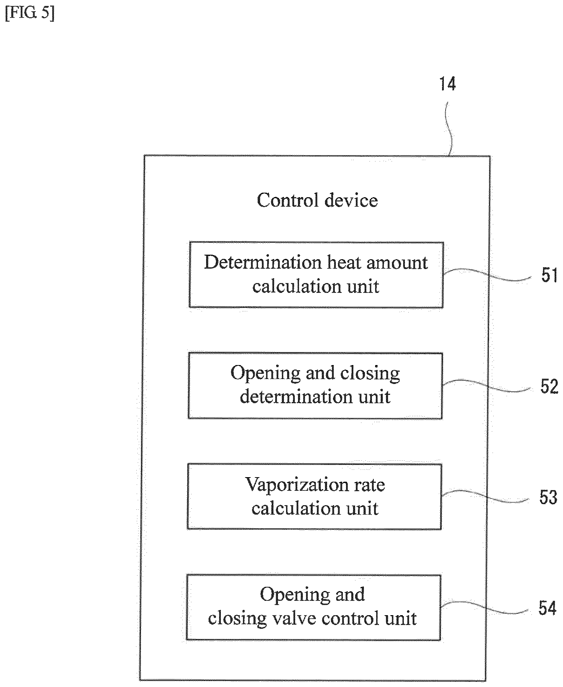

Fig. 5 is a block diagram illustrating a functional configuration of the control device 14 in the cooling system 10. For example, the arithmetic processing unit executes various programs stored in the storage unit, and thus, the control device 14 functions as a determination heat amount calculation unit 51, an opening and closing determination unit 52, a vaporization rate calculation unit 53, and an opening and closing valve control unit 54.

The determination heat amount calculation unit 51 calculates a determination heat amount based on a convective heat transfer amount and a solar irradiation amount for each of the plurality of cooling target regions 4a. In the present embodiment, the determination heat amount is a value as an index for determining whether or not to open each the opening and closing valve 13. The determination heat amount calculation unit 51 calculates the convective heat transfer amount and the solar irradiation amount for each opening and closing valve 13, that is, for each cooling target region 4a, and calculates the determination heat amount by using the following Equation (1).

$$\text{(determination heat amount)} = \text{(convective heat transfer amount)} + \text{(solar irradiation amount)}$$

$$\cdots (1)$$

In the above Equation (1), the convective heat transfer amount is a heat amount transferred to the cooling target region 4a from outside air around the tank cover 4, that is, from atmosphere with which the outer surface of the tank cover 4 is in contact. For example, the convective heat transfer amount is calculated from a direction and a speed of wind blowing against the liquefied gas carrying vessel 1 (wind direction and wind speed data), a speed and a direction of the liquefied gas carrying vessel 1 (ship speed and ship direction data), an atmospheric temperature around the liquefied gas carrying vessel 1 (atmospheric temperature data), etc.

In the above Equation (1), the solar irradiation amount is a heat amount transferred to the cooling target region 4a by solar irradiation. The solar irradiation amount is, for example, a latitude and a longitude of a position of the liquefied gas carrying vessel 1 and an orientation of the liquefied gas carrying vessel 1 (ship position and ship direction data), a solar altitude, a direct solar irradiation amount and a sky solar irradiation amount decided by a cloud amount, etc. In addition, an atmospheric longwave radiation amount may be considered.

For example, the control device 14 receives weather data from an external agency on land via a communication device (not illustrated) provided on the hull 2, and acquires the wind direction and wind speed data, the atmospheric temperature data, and the solar irradiation related data from the weather data. An anemometer may be provided on the hull 2, and the control device 14 may acquire the wind speed and wind direction data from the anemometer. Alternatively, a thermometer and a solar irradiation value meter may be provided on the hull 2, and the control device 14 may acquire the atmospheric temperature data and the solar irradiation related data from the solar irradiation value meter.

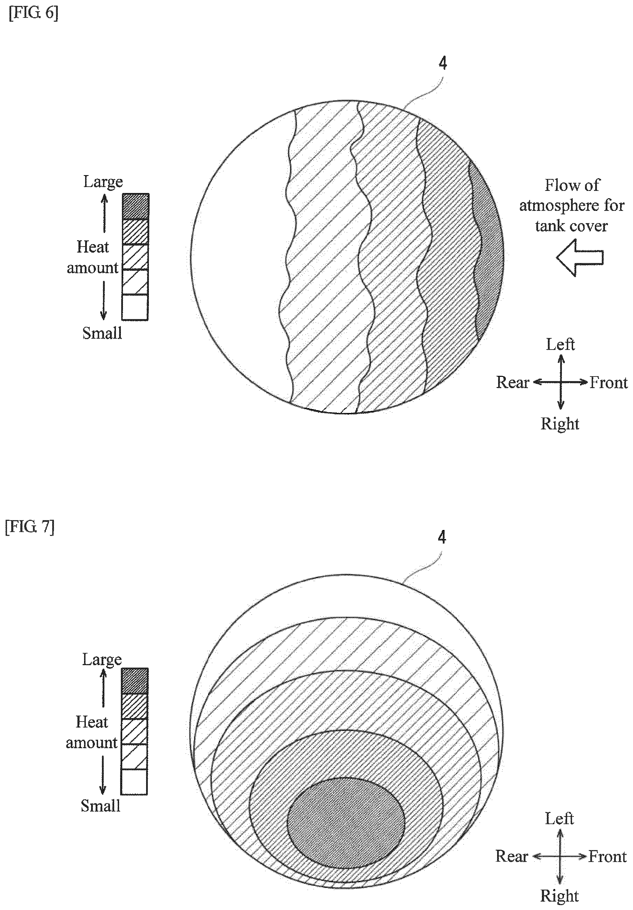

Fig. 6 is an example of a distribution of the convective heat transfer amount transferred from the atmosphere to the tank cover 4, and Fig. 7 is an example of a distribution of the solar irradiation amount transferred to the tank cover 4 by the solar irradiation at a certain time. Figs. 6 and 7 are diagrams of the tank cover 4 when viewed from above. Also, in Figs. 6 and 7, an upper side of the paper, a lower side of the paper, a right side of the paper, and a left side of the paper correspond to a left side, a right side, a front side, and a rear side in a traveling direction of the liquefied gas carrying vessel 1.

Since the amount of cooling water stored in the storage tank 12 is limited, it is desirable that a temperature rise of the tank cover 4 is efficiently suppressed with a small injection amount. In the example illustrated in Fig. 6, the atmosphere flows from the front side to the rear side of the tank cover 4, and thus, the convective heat transfer amount becomes large in a region on the front side of the tank cover 4. Thus, in order to suppress the temperature rise of the tank cover 4 due to the convective heat transfer amount, it is efficient to intensively inject the cooling water to the cooling target region 4a located on the front side. In the example illustrated in Fig. 7, the sun is located on the right side of the tank cover 4, and the solar irradiation amount becomes large in a region on the right side of the tank cover 4. Thus, in order to suppress the temperature rise of the tank cover 4 due to the solar irradiation amount, it is efficient to intensively inject the cooling water to the cooling target region 4a located on the right side. In the present embodiment, in order to efficiently cool the tank cover 4, the cooling target region 4a to be cooled (the opening and closing valve 13 to be opened) is decided by comprehensively determining the influence of the convective heat transfer amount and the solar irradiation amount by using the determination heat amount.

Referring back to Fig. 5, the opening and closing determination unit 52 determines whether or not to open each opening and closing valve 13 based on the determination heat amount calculated by the determination heat amount calculation unit 51. Specifically, a threshold value is set for the determination heat amount of each cooling target region 4a, and the opening and closing determination unit 52 decides whether or not to open each opening and closing valve 13 by determining whether or not each determination heat amount exceeds the threshold value. The opening and closing determination unit 52 decides to open the corresponding opening and closing valve 13 when the determination heat amount exceeds the threshold value, and the opening and closing determination unit 52 determines to maintain a state in which the corresponding opening and closing valve 13 is closed when the determination heat amount does not exceed the threshold value.

The vaporization rate calculation unit 53 calculates a natural vaporization rate of the liquefied gas within the tank 3 per predetermined time. In the present embodiment, the vaporization rate calculated by the vaporization rate calculation unit 53 (hereinafter, referred to as a "calculated vaporization rate") is used for deciding the injection amount of cooling water from each nozzle 11 by the opening and closing determination unit 52. For example, the calculated vaporization rate is a ratio of a volume change per unit day (V1 - V2) to a liquefied gas volume V1 within the tank 3, and is calculated by the following Equation (2).

$$\text{(calculated vaporization rate)} = (V1 - V2) / (V1 \times \text{days}) \times 100 \cdots (2)$$

where V1 and V2 are acquired based on a liquid level gauge (not illustrated) and a tank table (a table in which actual liquefied gas volume is deduced from temperatures and densities of a gas layer and a liquid layer within the tank 3, trim and list of the vessel, and a liquid level of the liquid level gauge) provided at the tank 3. Details of the method for deciding the injection amount will be described below.

The opening and closing valve control unit 54 sends a control signal to each opening and closing valve 13 based on the determination result using the opening and closing determination unit 52.

Next, a flow of determination processing for determining whether or not to open the opening and closing valve 13 by the control device 14 will be described.

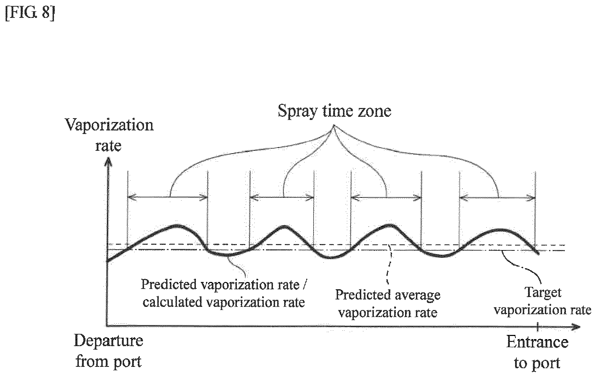

Initially, as a preparation for performing the determination processing during the operation of the liquefied gas carrying vessel 1, the natural vaporization rate at which the liquefied gas is naturally vaporized within the tank 3 during the entire operation period from when the liquefied gas carrying vessel departs from the port to when the liquefied gas carrying vessel enters the port is predicted before the liquefied gas carrying vessel 1 departs from a port. Hereinafter, the predicted vaporization rate is referred to as a "predicted vaporization rate". Fig. 8 is a graph illustrating an example of a temporal change of the predicted vaporization rate in the entire operation. The predicted vaporization rate is predicted from, for example, a sea weather condition and a route plan. A time zone (spray time zone) in which the control device 14 executes the determination processing is planned from the temporal change of the predicted vaporization rate. In the example illustrated in Fig. 8, an average value of the predicted vaporization rates in the entire operation is set as a predicted average vaporization rate, and when the predicted average vaporization rate exceeds a target vaporization rate, a time zone in which the fluctuating predicted vaporization rate exceeds the target vaporization rate is set as the spray time zone.

The setting of the spray time zone is not limited thereto. For example, a time zone in which the calculated vaporization rate calculated by the vaporization rate calculation unit 53 at a predetermined time after the liquefied gas carrying vessel departs the port exceeds the target vaporization rate may be set as the spray time zone (See Fig. 8).

During a period from when the liquefied gas carrying vessel 1 departs the port and to when the liquefied gas carrying vessel enters the port, the control device 14 executes the determination processing in the planned spray time zone. Specifically, the control device 14 executes the determination processing at predetermined time intervals (for example, one hour) in the spray time zone.

Initially, in the determination processing, the determination heat amount calculation unit 51 calculates the determination heat amount based on the convective heat transfer amount and the solar irradiation amount for each of the plurality of cooling target regions 4a. Subsequently, the opening and closing determination unit 52 determines whether or not the determination heat amount exceeds the threshold value for each of the plurality of cooling target regions 4a. By doing this, the opening and closing determination unit 52 decides the opening and closing valve 13 to be opened from the plurality of opening and closing valves 13.

In addition, the opening and closing determination unit 52 determines the injection amount of the cooling water from each nozzle 11 based on the calculated vaporization rate calculated by the vaporization rate calculation unit 53. Specifically, for example, the control device 14 sets the injection amount of the cooling water corresponding to the determination heat amount in advance such that as the determination heat amount becomes large, the injection amount becomes large. When the calculated vaporization rate is equal to or higher than the target vaporization rate, the opening and closing determination unit 52 decides the injection amount which is larger than the set injection amount. When the calculated vaporization rate is lower than the target vaporization rate, the opening and closing determination unit 52 decides the set injection amount or the injection amount which is smaller than the set injection amount. Alternatively, the opening and closing determination unit 52 may decide an injection time, that is, a time during which the opening and closing valve 13 is opened instead of the injection amount. The opening and closing determination unit 52 may decide to expand an injection range instead of the injection amount.

By doing this, when the injection amount from the nozzle 11 corresponding to the opening and closing valve 13 to be opened is decided by the determination processing using the control device 14, the opening and closing valve control unit 54 of the control device 14 sends the control signal to the opening and closing valve 13. The aforementioned plan is an example of the spray plan based on the sea weather prediction and the route plan before departure. Actually, sea weather data is updated at any time, or various amounts are decided according to the actual route.

As described above, the liquefied gas carrying vessel 1 according to the present embodiment can reduce the temperature of the tank cover 4 by injecting the cooling water to the outer surface of the tank cover 4. Accordingly, the heat amount transferred from the tank cover 4 to the gas between the tank 3 and the tank cover 4 can be reduced, and the temperature rise of the gas around the tank 3 can be consequently suppressed. Therefore, it is possible to reduce heat entering the tank 3 from the outside.

Further, in the present embodiment, since it is determined whether or not to open each of the plurality of opening and closing valves 13 based on the determination heat amount of each of the cooling target regions 4a, a location of the tank cover 4 at which the heat amount transferred from the outside is large can be mainly cooled by appropriately opening and closing the opening and closing valve 13 by using the determination result.

Further, in the present embodiment, at the upper portion of the tank cover 4, the cooling water injected from each spray nozzle flows downward along a hemispherical surface of the tank cover 4 due to gravity. Thus, not only the location of the outer surface of the tank cover 4 to which the cooling water is directly injected but also the location with which the cooling water comes in contact by flowing along the hemispherical surface of the tank cover 4 can be cooled. Therefore, the tank cover 4 can be efficiently cooled. A scaffold of a crew is usually constructed around the tank dome 32. The nozzles 11 and the opening and closing valves 13 corresponding to the nozzles are provided at the upper portion of the tank cover 4, and thus, it is easy to perform the maintenance of the nozzles 11 and the opening and closing valves 13.

The aforementioned embodiment is illustrative in all aspects, and should not be considered as limiting. The scope of the present invention is defined by the claims rather than the above description, and is intended to include all modifications within the scope and meaning equivalent to the claims.

For example, the number and arrangement method of the nozzles 11 are not limited to those described in the aforementioned embodiment. Although it has been described in the aforementioned embodiment that the nozzles 11 are arranged around the tank dome 32, the nozzles 11 may be arranged at a position not only around the tank dome 32 but also above the upper deck 21 and below the tank dome 32 in the tank cover 4, for example.

In addition, the shape of the tank cover to be cooled is also not limited to the shape described in the aforementioned embodiment, but may not be a hemisphere. Although it has been described in the aforementioned embodiment that one tank cover is provided for one tank 3, the tank cover may cover the plurality of tanks 3. In addition, the present invention is applicable not only to the spherical tank but also to a tank cover that covers other types of tanks such as a membrane tank. Further, in order to avoid water repellency of the cooling water, a paint or a baffle plate having excellent water absorption may be applied to the tank cover.

Although it has been described in the aforementioned embodiment that the fresh water is used as the cooling water, the cooling water may be seawater. In this case, the seawater may be stored in the storage tank 12, or the seawater around the hull 2 may be directly supplied to the nozzle 11 without passing through the storage tank 12.

Although it has been described in the aforementioned embodiment that the opening and closing valve 13 is an automatic valve that is automatically opened and closed based on the determination result of the opening and closing determination unit 52, the opening and closing valve 13 may be a manual valve that is opened and closed by manually operating an operation unit by the crew. In this case, the control device 14 may include a notification device that notifies the crew of the determination result by the opening and closing determination unit 52. For example, the notification device may be a display that displays the determination result using the opening and closing determination unit 52, or a lamp that is turned on according to the determination result. Since the crew is notified of the determination result of the opening and closing determination unit 52 from the notification device, it is possible to appropriately operate the manual valve determined to be opened.

Although it has been described in the aforementioned embodiment that the determination heat amount is calculated by using the above Equation (1), the method of calculating the determination heat amount for determining whether or not to open each opening and closing valve 13 is not limited thereto. For example, when the convective heat transfer amount and the solar irradiation amount differ in a degree of influence of the cooling target region 4a on the temperature rise, a value obtained by multiplying one or both of the calculated convective heat transfer amount and solar irradiation amount by contribution rates $\alpha$ and $\beta$ and adding the multiplied values may be used as the determination heat amount as in the following equation (3).

$$\text{(determination heat amount)} = \alpha \times \text{(convective heat transfer amount)} + \beta \times \text{(solar irradiation amount)} \cdots (3)$$

Only one of the convective heat transfer amount and the solar irradiation amount may be used as the determination heat amount.

Although it has been described in the aforementioned embodiment that the determination processing is executed at predetermined time intervals in the spray time zone planned before departure, a timing at which the determination processing is executed is not limited thereto. For example, it may not be necessary to set the spray time zone, and the determination processing may be executed when another condition is satisfied not at predetermined time intervals. For example, when the calculated vaporization rate of the liquefied gas calculated by the vaporization rate calculation unit 53 during an actual voyage exceeds a predetermined threshold value, the control device 14 may execute the determination processing. Further, spraying may be performed when a tank pressure exceeds a predetermined operating pressure.

The opening and closing determination unit 52 may not decide the opening and closing valve to be opened based on whether or not the determination heat amount exceeds the threshold value. For example, the opening and closing determination unit 52 may decide, as the opening and closing valve to be opened, the opening and closing valve corresponding to the cooling target region 4a at which the calculated convective heat transfer amount is the maximum.

Alternatively, the opening and closing determination unit 52 may decide, as the opening and closing valve to be opened, the opening and closing valve corresponding to the cooling target region 4a at which the calculated solar irradiation amount is the maximum. Alternatively, the opening and closing determination unit 52 may decide, as the opening and closing valve to be opened, the opening and closing valve corresponding to the cooling target region 4a at which the calculated convective heat transfer amount is the maximum and the opening and closing valve corresponding to the cooling target region 4a at which the calculated solar irradiation amount is the maximum. In this case, valve opening times of these opening and closing valves may be adjusted based on a ratio between the convective heat transfer amount and the solar irradiation amount.

**Reference Signs List**

1 liquefied gas carrying vessel
3 tank
4 tank cover
4a cooling target region
11 nozzle
13 opening and closing valve
51 determination heat amount calculation unit (heat amount calculation unit)
52 opening and closing determination unit

**Claims**

1. A liquefied gas carrying vessel (1) comprising:

   a tank (3) that stores a liquefied gas;
   a tank cover (4) that covers the tank (3); and
   a plurality of nozzles (11) that is arranged outside the tank cover (4), and injects cooling water to an outer surface of the tank cover (4),
   **characterized in that**
   the tank cover (4) has a plurality of cooling target regions (4a) corresponding to the plurality of nozzles (11), and the liquefied gas carrying vessel (1) includes

   a plurality of opening and closing valves (13) that is provided so as to correspond to the plurality of nozzles (11),
   a heat amount calculation unit (51) that calculates a determination heat amount based on at least one of a convective heat transfer amount which is a heat amount transferred from outside air around the tank cover (4) and a solar irradiation amount which is a heat amount transferred by solar irradiation for each of the plurality of cooling target regions (4a), and
   an opening and closing determination unit (52) that determines whether or not to open each of the plurality of opening and closing valves (13) based on the calculated determination heat amount.

2. The liquefied gas carrying vessel (1) according to claim 1, wherein

   the tank cover (4) has a hemispherical shape, and the plurality of nozzles (11) is arranged at an upper portion of the tank cover (4) so as to be arranged in a circumferential direction in planar view, and
   each nozzle (11) is a spray nozzle that injects the cooling water to the outer surface of the tank cover (4) while diffusing the cooling water.

**Patentansprüche**

1. Flüssiggasbeförderungsschiff (1), das Folgendes umfasst:

   einen Tank (3), in dem ein Flüssiggas gespeichert ist;
   eine Tankabdeckung (4), die den Tank (3) abdeckt; und

eine Vielzahl von Düsen (11), die außerhalb der Tankabdeckung (4) angeordnet ist und Kühlwasser auf eine Außenfläche der Tankabdeckung (4) spritzt,

**dadurch gekennzeichnet, dass**

die Tankabdeckung (4) eine Vielzahl von Kühlzielbereichen (4a) aufweist, die der Vielzahl von Düsen (11) entsprechen, und

das Flüssiggasbeförderungsschiff (1) Folgendes einschließt:

eine Vielzahl von Öffnungs- und Schließventilen (13), die so vorgesehen ist, dass sie der Vielzahl von Düsen (11) entspricht,

eine Wärmemengenberechnungseinheit (51), die basierend auf einer konvektiven Wärmeübertragungsmenge, die eine Wärmemenge ist, die von der Außenluft um die Tankabdeckung (4) herum übertragen wird, und/oder einer Sonneneinstrahlungsmenge, die eine Wärmemenge ist, die durch Sonneneinstrahlung übertragen wird, für jeden der Vielzahl von Kühlzielbereichen (4a) eine Bestimmungswärmemenge berechnet, und

eine Öffnungs- und Schließbestimmungseinheit (52), die basierend auf der berechneten Bestimmungswärmemenge bestimmt, ob jedes der Vielzahl von Öffnungs- und Schließventilen (13) geöffnet werden soll oder nicht.

2. Flüssiggasbeförderungsschiff (1) nach Anspruch 1, wobei

die Tankabdeckung (4) eine Halbkugelform aufweist und die Vielzahl von Düsen (11) so an einem oberen Abschnitt der Tankabdeckung (4) angeordnet ist, dass sie in einer Draufsicht in einer Umfangsrichtung angeordnet ist, und

jede Düse (11) eine Sprühdüse ist, die das Kühlwasser auf die Außenfläche der Tankabdeckung (4) spritzt, während das Kühlwasser verteilt wird.

**Revendications**

1. Navire de transport de gaz liquéfié (1) comprenant :

une cuve (3) renfermant du gaz liquéfié,

un couvercle de cuve (4) recouvrant la cuve (3), et

une pluralité de buses (11) agencée à l'extérieur du couvercle de cuve (4) et injectant de l'eau de refroidissement sur la surface extérieure du couvercle de cuve (4) ;

**caractérisé en ce que**

le couvercle de cuve (4) a une pluralité de zones cibles de refroidissement (4a) correspondant à la pluralité de buses (11), et

le navire de transport de gaz liquéfié (1) comporte :

une pluralité de vannes d'ouverture et de fermeture (13) prévue de façon à correspondre à la pluralité de buses (11),

une unité de calcul de quantité de chaleur (51) qui calcule une quantité de chaleur de détermination compte tenu d'une quantité de transfert de chaleur par convection, consistant en une quantité de chaleur transférée à partir de l'air extérieur environnant le couvercle de cuve (4), et/ou d'une quantité de rayonnement solaire, consistant en une quantité de chaleur transférée par le rayonnement solaire, pour chacune des zones de la pluralité de zones cibles de refroidissement (4a), et

une unité de détermination d'ouverture et fermeture (52) qui détermine s'il y a lieu ou non d'ouvrir chacune des vannes de la pluralité de vannes d'ouverture et de fermeture (13) compte tenu de la quantité de chaleur de détermination calculée.

2. Navire de transport de gaz liquéfié (1) selon la revendication 1, dans lequel

le couvercle de cuve (4) est de forme hémisphérique, et la pluralité de buses (11) est agencée sur une partie supérieure du couvercle de cuve (4) en étant agencée de manière circonférentielle, vue en plan, et

chaque buse (11) est un gicleur qui injecte de l'eau de refroidissement sur la surface extérieur du couvercle de cuve (4) tout en diffusant l'eau de refroidissement.

[FIG. 1]

[FIG. 2]

[FIG. 3]

14
Control device

10

13

16

32

11

4

12

15

4a  4a  4a  4a  4a

[FIG. 4]

[FIG. 5]

14

| Control device |
| --- |
| Determination heat amount calculation unit | 51 |
| Opening and closing determination unit | 52 |
| Vaporization rate calculation unit | 53 |
| Opening and closing valve control unit | 54 |

[FIG. 6]

[FIG. 7]

[FIG. 8]

Vaporization rate

Spray time zone

Predicted vaporization rate / calculated vaporization rate

Predicted average vaporization rate

Target vaporization rate

Departure from port

Entrance to port

**EP 3 677 497 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007308043 A
- JP 2016016806 A